# EUROPEAN PATENT APPLICATION

(11) **EP 2 151 884 A1**
(43) Date of publication of application: **10.02.2010**
(21) Application number: 08764905.9
(22) Date of filing: 30.05.2008
(51) Int. Cl.: H01M 14/00, B32B 17/10, H01B 5/14, H01L 31/04

(54) **LAMINATE AND SOLAR BATTERY USING THE LAMINATE**

(30) Priority: 30.05.2007 JP 2007143757
(71) Applicant: Nippon Electric Glass Co., Ltd., Otsu-shi Shiga 520-8639 (JP)
(72) Inventor: SAKAMOTO, Akihiko, Otsu-shi Shiga 520-8639 (JP); SAWADA, Masahiro, Otsu-shi Shiga 520-8639 (JP)
(74) Representative: Henkel, Feiler & Hänzel
(86) International application number: PCT/JP2008/059987
(87) International publication number: WO 2008/149793

(57) **Abstract**

The present invention aims to provide a laminate which endures a heat treatment in the cell production process, also has durability for practical use, and becomes light in weight, as well as a solar cell using the same.

A laminate of the present invention is a laminate including a glass plate having a first surface and a second surface, an conductive film formed on the first surface of the glass plate, and a photoactive layer formed on the conductive film, in which the glass plate is made of a glass having a strain point of 400°C or higher and has a thickness of 10 µm to 2.2 mm, and a resin is formed on the second surface of the glass plate.

In addition, a solar cell of the present invention is a solar cell including: a laminate including a glass plate having a first surface and a second surface, an conductive film formed on the first surface of the glass plate, and a photoactive layer formed on the conductive film; a transparent substrate; a transparent electrode formed on one surface of the transparent substrate; and an electrolyte included between the laminate and the transparent electrode, in which the glass plate is made of a glass having a strain point of 400°C or higher and has a thickness of 10 µm to 2.2 mm, and a resin is formed on the second surface of the glass plate.

## Description

### TECHNICAL FIELD

The present invention relates to a laminate, particularly a laminate to be used for a solar cell and a solar cell using the same, particularly a dye-sensitized solar cell.

### BACKGROUND ART

In these days, solar cells have attracted great attention as clean energy sources for the next generation. Among them, since a dye-sensitized solar cell is easy to produce, an environmental burden at cell production is small, and power-generating efficiency in room is excellent, it has particularly attracted attention in recent years. Hitherto, a solar cell having a structure where a power-generating material is disposed on a glass substrate has been used, but it is a constraint on installation that the glass substrate has a large weight or the substrate having a curved shape cannot be produced.

Moreover, in the present technical field, development of a lightweight solar cell rich in flexibility has been strongly desired. In this regard, a light source for power generation by a solar cell is not necessarily sunlight but may be artificial light. In the present application, a power-generating apparatus including one utilizing artificial light is expressed as a solar cell.

In order to prepare a lightweight solar cell rich in flexibility, it is considered to use a resin as a substrate material instead of glass. However, since a resin has a low heat resistance, it cannot endure a heat process for forming a semiconductor electrode (photoactive layer) on the substrate. In order to solve the problem, there has been proposed a method for preparing a dye-sensitized cell wherein only a photoactive substance on the substrate is selectively heated using a microwave (see e.g., Non-Patent Document 1).
Non-Patent Document 1: Uchida, "Nano Kessho Sanka Chitan Maku no Maikuroha Shousei to Koudenshi Idou (Microwave Sintering of Nanocrystalline Titanium Oxide Film and Photoelectron Transfer)", Photocatalysis, Photo Functionalized Materials Society, 16, p31-38 (2005)

### DISCLOSURE OF THE INVENTION

### Problems that the Invention is to Solve

As described in Non-Patent Document 1, a lightweight dye-sensitized solar cell having a resin as a substrate and rich in flexibility can be produced using a microwave heating technology. However, when the solar cell using the resin substrate is used in the open air, there are durability problems that the resin substrate tends to be deteriorated by ultraviolet light or the like or substances included in the cell (electrolyte components) permeate through the resin and vaporize since gas permeability of the resin is high. Thus, it is difficult to produce a practical cell. Furthermore, it is also a defect that a microwave-irradiating apparatus is expensive and thus it is difficult to apply the technology to industrial uses.

The invention is devised in consideration of such situations and an object thereof is to provide a lightweight laminate possessing both of durability against the heat treatment in the cell production process and durability for practical use as well as a solar cell using the same.

### Means for Solving the Problems

The present inventors have found that a solar cell excellent in economical efficiency, lightweight, safety, and durability can be obtained by using, as a member of the solar cell, a laminate wherein a resin is formed on the surface of a glass plate having a high strain point, thereby proposing the laminate and the solar cell as the present invention.

Namely, a laminate of the present invention is a laminate including a glass plate having a first surface and a second surface, an conductive film formed on the first surface of the glass plate, and a photoactive layer formed on the conductive film, in which the glass plate is made of a glass having a strain point of 400°C or higher and has a thickness of 10 µm to 2.2 mm, and a resin is formed on the second surface of the glass plate.

In addition, a solar cell of the present invention is a solar cell including: a laminate including a glass plate having a first surface and a second surface, an conductive film formed on the first surface of the glass plate, and a photoactive layer formed on the conductive film; a transparent substrate; a transparent electrode formed on one surface of the transparent substrate; and an electrolyte included between the laminate and the transparent electrode, in which the glass plate is formed of a glass having a strain point of 400°C or higher and has a thickness of 10 µm to 2.2 mm, and a resin is formed on the second surface of the glass plate.

### Advantage of the Invention

Since the laminate of the invention has the above-mentioned constitution, a solar cell using the same endures a heat treatment in the cell production process, also has durability for practical use, and becomes light in weight. Namely, since the glass plate is made of a glass having a strain point of 400°C or higher, a highly versatile heat treatment apparatus can be used without using a microwave which requires an expensive apparatus at the time when a photoactive layer composed of titanium oxide or the like is formed on the glass plate. Thus, production efficiency becomes high and costs can be suppressed to low. Furthermore, even when the photoactive layer is sintered onto the glass plate at high temperature, the glass plate is not deformed since the strain point of the glass is higher than the heat treatment temperature. Moreover, since the thickness of the glass plate is 2.2 mm or less, weight saving of the solar cell can be achieved and also the resin formed on the surface of the glass plate suppresses breakage of the glass plate. Even if the glass plate is broken, it will not be scattered. Moreover, since the laminate of the invention uses the glass plate as a base material, an electrolyte of the solar cell does not vaporize outward through the laminate or moisture and gases do not enter from the outside, so that the solar cell is excellent in long-term stability. Furthermore, even if cracks are generated in the glass plate, effluence of the electrolyte can be prevented by the resin formed on the surface.

Accordingly, since the solar cell using the laminate of the invention is excellent in economical efficiency, lightweight, safety, and durability, the solar cell can sufficiently endure the use in the open air without imposing a burden on a structural body on which the solar cell is installed, and thus the cell is of practical use.

### BRIEF DESCRIPTION OF THE DRAWINGS

FIG. 1 is an explanatory drawing of the laminate of the invention.
FIG. 2 is an explanatory drawing of the dye-sensitized solar cell of Example 6 in accordance with the invention.
FIG. 3 is an explanatory drawing of the dye-sensitized solar cells of Examples 9 to 12 in accordance with the invention.

### Description of Reference Numerals and Signs

- 1: laminate
- 2: first glass plate
- 2a: first surface
- 2b: second surface
- 3: conductive film (ITO film)
- 4: photoactive layer
- 5: first resin
- 6: transparent substrate
- 6a: second glass plate
- 6aa: first surface
- 6ab: second surface
- 6b: second resin
- 7: transparent electrode (ITO film)
- 8: counter electrode (Pt film)
- 9: electrolyte (iodine electrolyte solution)
- 10, 20: dye-sensitized solar cell

### BEST MODE FOR CARRYING OUT THE INVENTION

In the invention, the photoactive layer is composed of a material which generates electrons and positive holes by irradiation with light such as ultraviolet light, visible light, near-infrared light, sunlight, or illumination light. For example, the layer is composed of a titanium oxide powder in the dye-sensitized solar cell and a dye for absorbing light is chemically adsorbed on the surface of the titanium oxide powder. Moreover, the conductive film plays a role as a conductor for introducing the electrons generated into an outer circuit and is usually made of ITO, FTO, ATO, or a metal thin film.

In the laminate of the invention, the glass plate has a thickness of 10 µm to 2.2 mm. When the glass plate is thicker than 2.2 mm, the effect of weight saving is lowered, while when the glass plate is thinner than 10 µm, flexibility is excellent but the plate tends to be broken.

Moreover, the glass plate preferably has a thickness of 20 µm to 0.3 mm. When thus constituted, further weight saving of the solar cell is achieved and also the cell is rich in flexibility and may extend an applicable range of its installation. More preferable thickness of the glass plate is 30 µm to 0.2 mm and further preferable thickness thereof is 40 µm to 0.1 mm.

As factors determining the flexibility of the glass plate, in addition to the thickness of the glass plate, an elastic modulus of the glass plate is important. Therefore, the glass plate preferably has an elastic modulus of 100 GPa or less. When thus constituted, the flexibility of the glass is not impaired. The elastic modulus is more preferably 90 GPa or less, and further preferably 80 GPa or less.

Moreover, the glass plate may be prepared by polishing the surface. However, since polishing takes labor and costs and also scratches on the glass surface generated by polishing lowers the strength, it is preferable that the first surface and/or the second surface of the glass plate is/are preferably non-polished surface(s) and it is more preferable that both of the first surface and the second surface are non-polished surfaces. In order to produce a thin glass plate having a non-polished surface in a large quantity and at low costs, it is suitable to form it by an overflow method, a slot-down method, a re-draw method, or the like.

As a method for forming a resin on the surface of the glass plate, a thermo compression bonding method is suitable. The thermo compression bonding method is a method including softening a resin by heating, followed by bonding it on the surface of the glass plate under compression. Since no adhesive is used, there is no fear that deterioration of the adhesive may be induced by the use in the open air for a long term to result in exfoliation. In this regard, the adhesive herein refers to an adhesive layer having a tackiness, but a surface-modifying layer or the like formed on the resin surface for improving close adherence are not included therein. In the thermo compression bonding method, a stress is generated at the time of cooling, resulting from a difference in thermal expansion coefficient between the glass plate and the resin. In general, since a glass has a small thermal expansion coefficient as compared with a resin, a larger thermal expansion coefficient of the glass is preferable in order to reduce the stress. However, when the thermal expansion coefficient is too large, the glass plate is warped or broken at the time when the photoactive layer is sintered onto the surface of the glass plate, so that a preferable range of the thermal expansion coefficient of the glass plate is 20×10⁻⁷/°C to 150×10⁻⁷/°C in the temperature range of 30 to 380°C. A more preferable range thereof is 25×10⁻⁷/°C to 130×10⁻⁷/°C and a further preferable range thereof is 30×10⁻⁷/°C to 110×10⁻⁷/°C.

The laminate of the invention can be suitably used as a member of a solar cell. Since the solar cell is supposed to be installed in the open air, there is a fear that it may be broken by physical impacts owing to flying objects and the like and thus a risk of its dropping is necessarily small even in such a case. In order to prevent the dropping at the time of breakage, it is required to keep integrity at the breakage without scattering its fragments. For the purpose, it is preferable to constitute the solar cell by materials which absorb the impacts imparted to the solar cell by elongation and is hardly broken. Accordingly, elongation at break of the resin to be used in the invention is preferably 200% or more, more preferably 300% or more, and further preferably 400% or more. Furthermore, since the breakage is less frequently caused when the strength against a tensile stress is higher, the tensile strength of the resin is preferably 10 MPa or more and more preferably 15 MPa or more.

Moreover, the resin is preferably a material having a small moisture permeability so that the electrolyte does not vaporize. Specifically, the moisture permeability of the resin is preferably 8×10⁻¹¹ ml·cm/cm²·s·Pa or less, and more preferably 6×10⁻¹¹ ml·cm/cm²·s·Pa or less.

Furthermore, a solar cell is frequently used with installing on buildings and vehicles (automobiles, ships, etc.). Therefore, there is a risk of being exposed to fire and thus it is necessary to avoid constituting the cell by highly flammable materials which promote the spread of the fire. Accordingly, the resin preferably has flame retardancy and specifically, it is preferable to use a resin having a flame retardancy equal to or higher than 94V-2 grade in accordance with UL 94 standard. It is more preferable to use a resin having a flame retardancy equal to or higher than 94V-1 grade, furthermore preferably 94V-0 grade.

In the above-mentioned constitution, any resins can be used so long as they are resins having durability for practical use. Copolymer resins having a linear molecular structure are preferable owing to an excellent durability and resins made of fluorine compound(s) (fluorocarbon resins) are more preferable since the resins are particularly excellent in durability and are excellent in chemical stability against external environment and internal materials to be used for the cell. Among them, a resin made of tetrafluoroethylene-hexafluoropropylene-vinylidene fluoride (THV) is particularly preferable since its melting temperature is low such as 100 to 200°C and the thermal compression bonding is easy. In addition, it is also possible to use fluorocarbon resins such as fluorinated ethylene-propylene (FEP), perfluoroalkylvinyl (PFA), polytetrafluoroethylene (PTFE), polyvinylidene fluoride (PVDF), ethylene-tetrafluoroethylene (ETFE), polychlorotrifluoroethylene (PCTFE), and ethylene-chlorotrifluoroethylene (ECTFE).

The thickness of the resin is not particularly limited but is preferably 0.03 to 3 mm, and more preferably 0.05 to 1 mm from the necessity of ensuring flexibility and strength.

The solar cell of the invention includes the above-mentioned laminate, a transparent substrate, a transparent electrode formed on one surface of the transparent substrate, and an electrolyte included between the laminate and the transparent electrode. In the case of the dye-sensitized solar cell, the electrolyte is preferably an iodine electrolyte solution.

In the above-mentioned constitution, when the glass plate and the resin possessed by the laminate are regarded as a first glass plate and a first resin, respectively, the transparent substrate is preferably composed of a second glass plate having a first surface and a second surface and a second resin formed on the first surface of the second glass plate. When thus constituted, the second resin formed on the first surface of the second glass plate suppresses the breakage of the second glass plate and thus the glass plate will not be scattered even if it is broken. Moreover, the electrolyte does not vaporize outward by the action of the second glass. In this case, the transparent electrode is formed on the second surface of the second glass plate.

Furthermore, the second glass plate to be used for the transparent substrate preferably has a thickness of 10 µm to 2.2 mm. When thus constituted, further weight saving of the solar cell can be achieved.

Moreover, the first glass plate and/or the second glass plate preferably has/have a thickness of 20 µm to 0.3 mm. When thus constituted, further weight saving of the solar cell can be achieved and also the cell is rich in flexibility and may extend an applicable range of its installation. More preferable thickness of the first glass plate and/or the second glass plate is/are 30 µm to 0.2 mm and further preferable thickness of the first glass plate and/or the second glass plate is/are 40 µm to 0.1 mm. The thickness of the first glass plate may not be the same as the thickness of the second glass plate.

Furthermore, since it is not necessary to subject the second glass plate to a heating treatment at high temperature, practical strength and safety increase when a strengthened glass subjected to a thermal strengthening or chemical strengthening treatment is used.

Incidentally, in order to increase a power-generation efficiency of the solar cell, it is possible to form a thin film of a novel metal such as platinum on the transparent substrate.

The first glass plate and/or the second glass plate preferably has/have an elastic modulus of 100 GPa or less. When thus constituted, the flexibility of the glass is not impaired. The elastic modulus is more preferably 90 GPa or less and further preferably 80 GPa.

Moreover, the glass plate may be prepared by polishing the surface. However, since polishing takes labor and costs and also scratches on the glass surface generated by polishing lowers the strength, it is preferable that the first surface or the second surface of the first glass plate and/or the second glass plate is/are preferably a non-polished surface(s) and it is more preferable that both of the first surface and the second surface are non-polished surfaces. In order to produce a thin glass plate having a non-polished surface in a large quantity and at low costs, it is suitable to form it by an overflow method, a slot-down method, a re-draw method, or the like.

As a method for forming the first resin and the second resin on the surface of the first glass plate and the surface of the second glass plate, respectively, a thermo compression bonding method is suitable. The thermo compression bonding method is a method including softening a resin by heating, followed by bonding it on the surface of the glass plate under compression. Since no adhesive is used, there is no fear that deterioration of the adhesive may be induced through the use in the open air for a long term to result in exfoliation. In the thermo compression bonding method, a stress is generated at the time of cooling resulting from a difference in thermal expansion coefficient between the glass plate and the resin. In general, since a glass has a small thermal expansion coefficient as compared with a resin, a larger thermal expansion coefficient of the glass is preferable in order to reduce the stress. However, when the thermal expansion coefficient is too large, the glass plate is warped or broken at the time when the photoactive layer is sintered onto the surface of the first glass plate, so that a preferable range of the thermal expansion coefficient of the first glass plate is 20×10⁻⁷/°C to 150×10⁻⁷/°C in the temperature range of 30 to 380°C. A more preferable range thereof is 25×10⁻⁷/°C to 130×10⁻⁷/°C and a further preferable range thereof is 30×10⁻⁷/°C to 110×10⁻⁷/°C. In this regard, the thermal expansion coefficient of the second glass plate is preferably coincident with the thermal expansion coefficient of the first glass plate in consideration of the warp of the solar cell.

Moreover, since it is not necessary to sinter the photoactive layer onto the transparent substrate, the layer may be composed of the second resin alone. In this case, the second resin is preferably a material having a small moisture permeability so that moisture in the electrolyte does not vaporize outward through the resin or moisture and gases do not enter into the electrolyte. Specifically, the moisture permeability of the second resin is preferably 8×10⁻¹¹ ml·cm/cm²·s·Pa or less and more preferably 6×10⁻¹¹ ml·cm/cm²·s·Pa or less.

For the same reason as in the case of the resin in the laminate, elongation at break of the first resin and/or the second resin to be used in the invention is/are preferably 200% or more, more preferably 300% or more, and further preferably 400% or more. Furthermore, since breakage is less frequently generated when the strength against tensile stress is higher, the tensile strength of the first resin and/or the second resin is/are preferably 10 MPa or more and more preferably 15 MPa or more.

Also, for the same reason as in the case of the resin in the laminate, the first resin and/or the second resin to be used in the invention preferably has/have flame retardancy. Specifically, it is preferable to use a resin having a flame retardancy equal to or higher than 94V-2 grade in accordance with UL 94 standard. It is more preferable to use a resin having a flame retardancy equal to or higher than 94V-1 grade, furthermore preferably 94V-0 grade.

In the above-mentioned constitution, any resins can be used as the first resin and the second resin so long as they are resins having durability for practical use. Copolymer resins having a linear molecular structure are preferable owing to an excellent durability and resins made of fluorine compound(s) are more preferable since the resins are particularly excellent in durability and are excellent in chemical stability against external environment and internal materials to be used for the cell. Among them, a resin made of tetrafluoroethylene-hexafluoropropylene-vinylidene fluoride (THV) is particularly preferable since its melting temperature is low such as 100 to 200°C and thermal compression bonding is easy. In addition, it is also possible to use fluorocarbon resins such as fluorinated ethylene-propylene (FEP), perfluoroalkylvinyl (PFA), polytetrafluoroethylene (PTFE), polyvinylidene fluoride (PVDF), ethylene-tetrafluoroethylene (ETFE), polychlorotrifluoroethylene (PCTFE), and ethylene-chlorotrifluoroethylene (ECTFE).

The thickness of the first resin and/or the second resin is/are not particularly limited but is/are preferably 0.03 to 3 mm, and more preferably 0.05 to 1 mm from the necessity of ensuring flexibility and strength.

### Examples

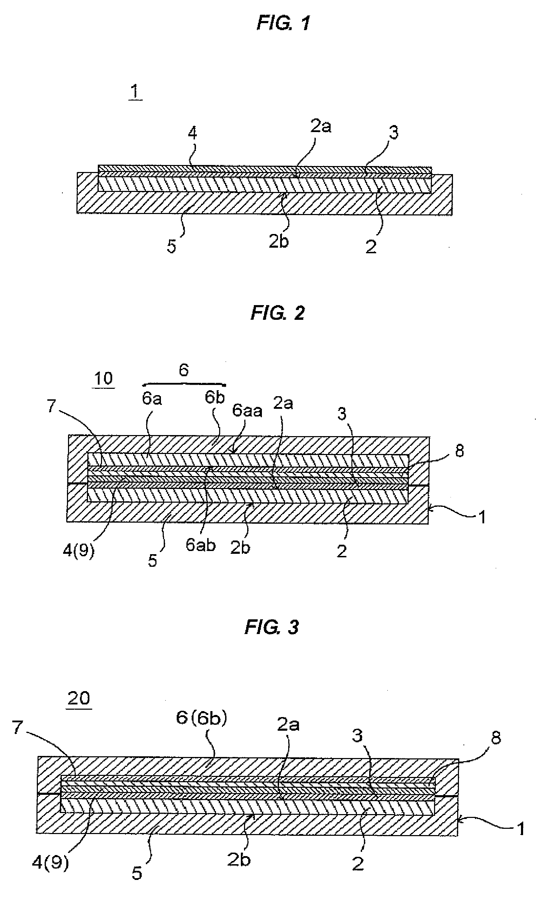

The following will describe Examples according to the invention with reference to Drawings and Tables. FIG. 1 is an explanatory drawing of a laminate of the invention, and FIG. 2 is an explanatory drawing of a dye-sensitized solar cell of the invention. FIG. 3 is an explanatory drawing of another dye-sensitized solar cell of the invention. Table 1 shows Examples 1 to 5, Table 2 shows Examples 6 to 8, Table 3 shows Examples 9 to 12, and Table 4 shows Comparative Examples 1 to 3.

**Table 1**

| | | | Example 1 | Example 2 | Example 3 | Example 4 | Example 5 |
|---|---|---|---|---|---|---|---|
| Laminate | First resin | Material | THV | THV | FEP | THV | THV |
| | | Thickness (mm) | 0.5 | 0.5 | 0.2 | 0.5 | 0.5 |
| | | Elongation at break (%) | 500 | 500 | 300 | 500 | 500 |
| | | Moisture permeability (ml·cm/cm²·s·Pa) | 4.0×10⁻¹¹ | 4.0×10⁻¹¹ | 3.8×10⁻¹¹ | 4.0×10⁻¹¹ | 4.0×10⁻¹¹ |
| | | Flame retardancy | 94V-0 | 94V-0 | 94V-0 | 94V-0 | 94V-0 |
| | First glass plate | Thickness (mm) | 0.05 | 0.1 | 0.1 | 1.1 | 2.0 |
| | | Distortion point (°) | 535 | 650 | 650 | 650 | 650 |
| | | Elastic modulus (GPa) | 71 | 70 | 70 | 70 | 70 |
| | | Thermal expansion coefficient (×10⁻⁷/°C) | 52 | 38 | 38 | 38 | 38 |
| | | Polishing | No | No | No | No | No |
| | Conductive layer | | ITO | ITO | ITO | ITO | ITO |
| | Photoactive layer | | TiO₂ | TiO₂ | TiO₂ | TiO₂ | TiO₂ |
| Transparent substrate | | | None | None | None | None | None |
| Weight (g/cm²) | | | 0.12 | 0.14 | 0.07 | 0.39 | 0.61 |
| Flexibility | | | Good | Good | Good | No flexibility | No flexibility |

**Table 2**

| | | | Example 6 | Example 7 | Example 8 |
|---|---|---|---|---|---|
| Laminate | First resin | Material | THV | THV | THV |
| | | Thickness (mm) | 0.5 | 0.5 | 0.5 |
| | | Elongation at break (%) | 500 | 500 | 500 |
| | | Moisture permeability (ml·cm/cm²·s·Pa) | 4.0×10⁻¹¹ | 4.0×10⁻¹¹ | 4.0×10⁻¹¹ |
| | | Flame retardancy | 94V-0 | 94V-0 | 94V-0 |
| | First glass plate | Thickness (mm) | 0.1 | 1.1 | 2.0 |
| | | Distortion point (°) | 650 | 650 | 650 |
| | | Elastic modulus (GPa) | 70 | 70 | 70 |
| | | Thermal expansion coefficient (×10⁻⁷/°C) | 38 | 38 | 38 |
| | | Polishing | No | No | No |
| | Conductive layer | | ITO | ITO | ITO |
| | Photoactive layer | | TiO₂ | TiO₂ | TiO₂ |
| Transparent substrate | Second glass plate | | Same as first glass plate | Same as first glass plate | Same as first glass plate |
| | Second resin | | Same as first resin | Same as first resin | Same as first resin |
| Weight (g/cm²) | | | 0.28 | 0.78 | 1.23 |
| Flexibility | | | Good | No flexibility | No flexibility |

**Table 3**

| | | | Example 9 | Example 10 | Example 11 | Example 12 |
|---|---|---|---|---|---|---|
| Laminate | First resin | Material | THV | FEP | THV | THV |
| | | Thickness (mm) | 0.5 | 0.2 | 0.5 | 0.5 |
| | | Elongation at break (%) | 500 | 300 | 500 | 500 |
| | | Moisture permeability (ml·cm/cm²·s·Pa) | 4.0×10⁻¹¹ | 3.8×10⁻¹¹ | 4.0×10⁻¹¹ | 4.0×10⁻¹¹ |
| | | Flame retardancy | 94V-0 | 94V-0 | 94V-0 | 94V-0 |
| | First glass plate | Thickness (mm) | 0.1 | 0.1 | 1.1 | 2.0 |
| | | Distortion point (°) | 650 | 650 | 650 | 650 |
| | | Elastic modulus (GPa) | 70 | 70 | 70 | 70 |
| | | Thermal expansion coefficient (×10⁻⁷/°C) | 38 | 38 | 38 | 38 |
| | | Polishing | No | No | No | No |
| | Conductive layer | | ITO | ITO | ITO | ITO |
| | Photoactive layer | | TiO₂ | TiO₂ | TiO₂ | TiO₂ |
| Transparent substrate | Second glass plate | | None | None | None | None |
| | Second resin | | Same as first resin | Same as first resin | Same as first resin | Same as first resin |
| Weight (g/cm²) | | | 0.26 | 0.12 | 0.50 | 0.73 |
| Flexibility | | | Good | Good | No flexibility | No flexibility |

**Table 4**

| | | | Comparative Example 1 | Comparative Example 2 | Comparative Example 3 |
|---|---|---|---|---|---|
| Laminate | First resin | Material | None | THV | None |
| | | Thickness (mm) | | 0.5 | |
| | | Elongation at break (%) | | 500 | |
| | | Moisture permeability (ml·cm/cm²·s·Pa) | | 4.0×10⁻¹¹ | |
| | | Flame retardancy | | 94V-0 | |
| | First glass plate | Thickness (mm) | 3.0 | 0.1 | 3.0 |
| | | Distortion point (°) | 650 | 375 | 650 |
| | | Elastic modulus (GPa) | 70 | 50 | 70 |
| | | Thennal expansion coefficient (×10⁻⁷/°C) | 38 | 90 | 38 |
| | | Polishing | No | Yes | No |
| | Conductive layer | | ITO | ITO | ITO |
| | Photoactive layer | | TiO₂ | TiO₂ | TiO₂ |
| Transparent substrate | Second glass plate | | None | Non | Same as first glass plate |
| | Second resin | | None | None | None |
| Weight (g/cm²) | | | 0.75 | 0.16 | 1.50 |
| Flexibility | | | No flexibility | Good | No flexibility |

As shown in FIG. 1, the laminate 1 of each of Examples 1 to 5 and Comparative Examples 1 and 2 included a first glass plate 2 having a first surface 2a and a second surface 2b, an conductive film 3 formed on the first surface 2a of the first glass plate 2, a photoactive layer 4 formed on the conductive film 3, and a first resin 5 formed on the second surface 2b of the first glass plate 2.

The conductive film 3 was made of an ITO film and was formed by a sputtering method. Moreover, the photoactive layer 4 was formed by coating the ITO surface with a TiO₂ powder and subsequently sintering the whole at 500°C for 1 hour, and a dye was chemically adsorbed on the surface of the TiO₂ powder. The first resin 5 was attached to the glass plate 2 by a thermo compression bonding method through pressurization at 2 atm under heating at 140°C.

In this regard, as the first glass plate 2, "BLC" manufactured by Nippon Electric Glass Co., Ltd. was used in Example 1, "OA-10" manufactured by Nippon Electric Glass Co., Ltd. was used in Examples 2 to 12 and Comparative Examples 1 and 3, and "LG-71" manufacture by Nippon Electric Glass Co., Ltd. was used in Comparative Example 2. The thickness and properties of the first glass plate 2 are as shown in Tables 1 to 4. Moreover, the first resin 5 was made of each of the resins having materials, thickness, and properties as shown in Table 1 to 4. In the laminate of Comparative Example I, the thickness of the first glass plate was so thick as 3 mm and the first resin 5 was not formed.

As shown in FIG. 2, the dye-sensitized solar cell 10 of Example 6 included the laminate 1 shown in Example 2, a transparent substrate 6 composed of a second glass plate 6a and a second resin (THV film) 6b formed on the first surface 6aa thereof, a transparent electrode (ITO film) 7 formed on one surface of the transparent substrate 6, a counter electrode 8 made of a Pt film further formed on the transparent electrode 7, and an electrolyte 9 included between the conductive film 3 of the laminate 1 and the counter electrode 8. In this regard, the electrolyte 9 was made of an iodine electrolyte solution and was present in a state that the photoactive layer 4 had been impregnated therewith. Moreover, in the dye-sensitized solar cell 10, the laminate 1 was attached to the transparent substrate 6 by simultaneous thermo compression bonding of the first resin 5 and the second resin 6b to the first glass plate and the second glass plate, respectively. Here, the same one as the first glass plate was used as the second glass plate in Examples 6 to 8, and the same one as the first resin was used as the second resin in Examples 6 to 12.

As shown in FIG. 3, the dye-sensitized solar cell 20 of each of Examples 9 to 12 was constituted in the same manner as in Example 6 except that the solar cell included the laminate 1 of each of Examples 2 to 5, a transparent substrate 6 composed of the second resin 6b which is the same as the first resin 5, a transparent electrode (ITO film) 7 formed on one surface of the transparent substrate 6, a counter electrode 8 made of a Pt film further formed on the transparent electrode 7, and an electrolyte 9 included between the conductive film 3 of the laminate 1 and the counter electrode 8.

Moreover, the first glass plate in Example 1 was molded by a re-draw method and the first glass plates and the second glass plates in Examples 2 to 12 and Comparative Examples 1 and 3 were all molded by an overflow method, all of the surfaces being non-polished surfaces. However, the first glass plate in Comparative Example 2 was molded by a roll forming method, the both surfaces being optically polished after molding.

Furthermore, the dye-sensitized solar cell of Comparative Example 3 (not shown in Drawings) included the laminate shown in Comparative Example 1, a transparent substrate composed of the second glass plate alone, a transparent electrode (ITO film) formed on one surface of the transparent substrate, a counter electrode made of a Pt film further formed on the transparent electrode, and an electrolyte included between the conductive film of the laminate and the counter electrode.

As shown in Table 1, the laminates of Examples 1 to 5 were light in weight since the thickness of the glass plates was thin. Particularly, the laminates of Examples 1 to 3 were also excellent in flexibility since the thickness of the glass plate was one thirtieth or smaller of that of Comparative Example 1. Moreover, the dye-sensitized solar cells of Examples 6 to 12 were light in weight since the thickness of the glass plates was thin. Particularly, the dye-sensitized solar cells of Examples 6, 9, and 10 were also excellent in flexibility since the thickness of the glass plates were so thin as 0.1 mm. Among them, since those of Examples 9 and 10 did not include the second glass plate, they were lighter in weight and also highly flexible. Moreover, the dye-sensitized solar cells of Examples 6 to 12 can suppress the vaporization of the electrolyte and also can inhibit the effluence of the electrolyte even if cracks are generated in the first glass plate or the second glass plate, by virtue of the first resin and the second resin.

On the contrary, since the laminate of Comparative Example 1 and the dye-sensitized solar cell of Comparative Example 3 did not have any resin on the surface of the glass plate, it was necessary to thicken the glass plate in order to obtain practical strength and safety, and thus the laminate and the solar cell were heavy in weight and were rigid. Although the laminate of Comparative Example 2 was thin in thickness of the first glass plate, since it was made of a glass having a low strain point, a lightweight and flexible laminate was obtained but the glass plate was softened and deformed at the time when the photoactive layer was sintered.

Incidentally, the strain point of the glass plate was measured by a fiber elongation method. Moreover, the elastic modulus was measured by means of a resonant elastic modulus measuring apparatus. The thermal expansion coefficient was measured by means of a dilatometor. Moreover, the elongation at break of the resin was measured by means of a tensile tester and the moisture permeability was measured in accordance with JIS K 7126:1987, "a test method for gas permeability of plastic film and sheet". Furthermore, the flame retardancy of the resin was evaluated in accordance with UL94 standard. Moreover, the flexibility of the laminate and the solar cell was evaluated as "good" when they were easily bent by human power and as "no flexibility" when they are not easily bent.

While the invention has been described in detail and with reference to specific examples thereof, it will be apparent to one skilled in the art that various changes and modifications can be made therein without departing from the spirit and scope thereof.
The present application is based on Japanese Patent Application No. 2007-143757 filed on May 30, 2007, and the contents are incorporated herein by reference.

### INDUSTRIAL APPLICABILITY

The laminate obtained by the invention and the solar cell using the same are most suitable especially for a dye-sensitized solar cell.

## Claims

1. A laminate comprising a glass plate having a first surface and a second surface, an conductive film formed on the first surface of the glass plate, and a photoactive layer formed on the conductive film, wherein the glass plate is made of a glass having a strain point of 400°C or higher and has a thickness of 10 µm to 2.2 mm, and a resin is formed on the second surface of the glass plate.

2. The laminate according to claim 1, wherein the glass plate has a thickness of 20 µm to 0.3 mm.

3. The laminate according to claim 1 or 2, wherein the glass plate has an elastic modulus of 100 GPa or less.

4. The laminate according to any one of claims 1 to 3, wherein the first surface and/or the second surface of the glass plate is/are non-polished surface(s).

5. The laminate according to any one of claims 1 to 4, wherein the glass plate has a thermal expansion coefficient of 20×10⁻⁷/°C to 150×10⁻⁷/°C in the temperature range of 30 to 380°C.

6. The laminate according to any one of claims 1 to 5, wherein the resin has an elongation at break of 200% or more.

7. The laminate according to any one of claims 1 to 6, wherein the resin has a tensile strength of 10 MPa or more.

8. The laminate according to any one of claims 1 to 7, wherein the resin has a moisture permeability of 8×10⁻¹¹ ml·cm/cm²·s·Pa or less.

9. The laminate according to any one of claims 1 to 8, wherein the resin has a flame retardancy equal to or higher than 94V-2 grade in accordance with UL94 standard.

10. The laminate according to any one of claims 1 to 9, wherein the resin is a copolymer resin having a linear molecular structure.

11. The laminate according to any one of claims 1 to 10, wherein the resin is a fluorocarbon resin.

12. The laminate according to claim 11, wherein the fluorocarbon resin is a resin made of tetrafluoroethylene-hexafluoropropylene-vinylidene fluoride.

13. The laminate according to any one of claims 1 to 12, wherein the resin is provided through adhesion by thermo compression bonding onto the second surface of the glass plate.

14. A solar cell comprising the laminate according to any one of claims 1 to 13, a transparent substrate, a transparent electrode formed on one surface of the transparent substrate, and an electrolyte included between the laminate and the transparent electrode.

15. The solar cell according to claim 14, wherein, when the glass plate and the resin possessed by the laminate are regarded as a first glass plate and a first resin, respectively, the transparent substrate is composed of a second glass plate having a first surface and a second surface and a second resin formed on the first surface of the second glass plate.

16. The solar cell according to claim 15, wherein the second glass plate has a thickness of 10 µm to 2.2 mm.

17. The solar cell according to claim 15, wherein the second glass plate has a thickness of 20 µm to 0.3 mm.

18. The solar cell according to any one of claims 15 to 17, wherein the second glass plate has an elastic modulus of 100 GPa or less.

19. The solar cell according to any one of claims 15 to 18, wherein the first surface and/or the second surface of the second glass plate is/are non-polished surface(s).

20. The solar cell according to any one of claims 15 to 19, wherein the second resin is provided through adhesion by thermo compression bonding onto the first surface of the second glass plate.

21. The solar cell according to claim 14, wherein the transparent substrate is composed of a second resin alone.

22. The solar cell according to any one of claims 15 to 21, wherein the second resin has an elongation at break of 200% or more.

23. The solar cell according to any one of claims 15 to 22, wherein the second resin has a tensile strength of 10 MPa or more.

24. The solar cell according to any one of claims 15 to 23, wherein the second resin has a flame retardancy equal to or higher than 94V-2 grade in accordance with UL94 standard.

25. The solar cell according to any one of claims 15 to 24, wherein the second resin is a fluorocarbon resin.

26. The solar cell according to claim 25, wherein the fluorocarbon resin is a copolymer resin having a linear molecular structure.

27. The solar cell according to claim 25 or 26, wherein the fluorocarbon resin is a resin made of tetrafluoroethylene-hexafluoropropylene-vinylidene fluoride.

28. The solar cell according to any one of claims 15 to 27, wherein the second resin has a moisture permeability of 8×10⁻¹¹ ml·cm/cm²·s·Pa or less.
